(19) Europäisches Patentamt
European Patent Office
Office européen des brevets

(11) **EP 1 297 065 B1**

(12) **EUROPÄISCHE PATENTSCHRIFT**

(45) Veröffentlichungstag und Bekanntmachung des Hinweises auf die Patenterteilung:
**23.02.2005 Patentblatt 2005/08**

(21) Anmeldenummer: **01957878.0**

(22) Anmeldetag: **22.06.2001**

(51) Int Cl.[7]: **C08L 23/00**, C08L 59/00, C08L 27/06, C08L 67/00, C08L 71/12, C08L 71/00, C08L 69/00

(86) Internationale Anmeldenummer:
**PCT/EP2001/007129**

(87) Internationale Veröffentlichungsnummer:
**WO 2002/000780 (03.01.2002 Gazette 2002/01)**

(54) **STABILISIERTE THERMOPLASTISCHE FORMMASSEN**
STABILISED THERMOPLASTIC MOULDING MATERIALS
MATIERES MOULABLES THERMOPLASTIQUES STABILISEES

(84) Benannte Vertragsstaaten:
**AT BE CH CY DE DK ES FI FR GB GR IE IT LI LU MC NL PT SE TR**

(30) Priorität: **29.06.2000 DE 10030553**

(43) Veröffentlichungstag der Anmeldung:
**02.04.2003 Patentblatt 2003/14**

(73) Patentinhaber: **BASF AKTIENGESELLSCHAFT**
**67056 Ludwigshafen (DE)**

(72) Erfinder:
- **DAMES, Burkhardt**
  **64646 Heppenheim (DE)**
- **ZIEGLER, Bernd**
  **67161 Gönnheim (DE)**

(56) Entgegenhaltungen:

| | |
|---|---|
| **EP-A- 0 896 030** | **EP-A- 0 992 541** |
| **DE-A- 19 602 545** | **US-A- 4 046 843** |
| **US-A- 5 362 784** | **US-A- 5 779 954** |

- **PATENT ABSTRACTS OF JAPAN vol. 1997, no. 11, 28. November 1997 (1997-11-28) & JP 09 188857 A (SEKISUI CHEM CO LTD), 22. Juli 1997 (1997-07-22) & JP 09 188857 A (SEKISUI CHEM CO LTD) 22. Juli 1997 (1997-07-22)**
- **DATABASE CA [Online] CHEMICAL ABSTRACTS SERVICE, COLUMBUS, OHIO, US; FUKAMACHI, MASATO ET AL: "Vinyl chloride polymer plastisol compositions for bonding of wood" retrieved from STN Database accession no. 126:32742 CA XP002188723 & JP 08 269418 A (TOSOH CORP, JAPAN) 15. Oktober 1996 (1996-10-15)**
- **DATABASE CA [Online] CHEMICAL ABSTRACTS SERVICE, COLUMBUS, OHIO, US; SAITO, SATOSHI ET AL: "Polyamide materials with good fluidity and processability for plastic magnets" retrieved from STN Database accession no. 122:203615 CA XP002188724 & JP 06 287445 A (TODA KOGYO CORP, JAPAN) 11. Oktober 1994 (1994-10-11)**

Bemerkungen:
Die Akte enthält technische Angaben, die nach dem Eingang der Anmeldung eingereicht wurden und die nicht in dieser Patentschrift enthalten sind.

EP 1 297 065 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft thermoplastische Formmassen, enthaltend als wesentliche Komponenten

A) 29 bis (100 Gew.-% minus 1 ppb) mindestens eines thermoplastischen Polyoxymethylenhomo- oder -copolymerisates,

B) 1 ppb bis 1 Gew.-% mindestens eines Polyethyleniminhomo- oder -copolymerisates, sowie darüber hinaus

C) 0 bis 70 Gew.-% weiterer Zusatzstoffe,

wobei die Gewichtsprozente der Komponenten A) bis C) stets 100 % ergeben.

Weiterhin betrifft die Erfindung die Verwendung der erfindungsgemäßen Formmassen zur Herstellung von Formkörpern jeglicher Art sowie die hierbei erhältlichen Formkörper jeglicher Art. Außerdem betrifft die Erfindung ein Verfahren zur Erhöhung der Dieselkraftstoffbeständigkeit von Polyoxymethylenen, sowie die hierbei erhältlichen Polyoxymethylenformkörper. Darüberhinaus betrifft die Erfindung die Verwendung von Polyethyleniminhomo- oder -copolymerisaten zur Erhöhung der Dieselkraftstoffbeständigkeit von Polyoxymethylenen.

Zum Stande der Technik gehört Thermoplaste, insbesondere Polyoxymethylen-Formmassen durch geeignete Additive zu stabilisieren. Zu diesem Zwecke werden beispielsweise Antioxidantien, wie z.B. sterisch gehinderte Phenolderivate zugesetzt. Derartige Phenolderivate sind z.B. in der DE-A-27 02 661 zusammengestellt. Nach der Lehre der EP-A-19 761 werden glasfaserverstärkten Polyoxymethylen-Formmassen zur Verbesserung der Schlagzähigkeit Alkoxymethylmelamine einverleibt. Polyoxymethylen-Formmassen, die gegen die Einwirkung von Wärme im Temperaturbereich von 100 bis 150°C über einen längeren Zeitraum stabilisiert sind, werden nach Angaben der EP-A-52 740 durch den Zusatz eines teilveretherten speziellen Melamin-Formaldehyd-Kondensationsproduktes erhalten. Die DE-A-3 011 280 beschreibt stabilisierte Oxymethylencopolymermassen, die als Stabilisator eine Mischung aus mindestens einem aminosubstituierten Triazins, mindestens einem sterisch gehinderten Phenol und mindestens einer metallhaltigen Verbindung enthalten. Die metallhaltigen Verbindungen bestehen hierbei vorzugsweise aus Kalium-, Calcium-, Magnesiumhydroxid oder Magnesiumcarbonat.

Trotz dieser Maßnahmen besitzen bekannte Polyoxymethylen-Formmassen jedoch für einige Anwendungen eine nicht ausreichende thermische Stabilität, die die Verarbeitung zu Formkörpern nachteilig beeinflußt und beispielsweise zu Ablagerungen am Formwerkzeug oder zur Verschlechterung der Entformbarkeit beitragen und/oder beim späteren Gebrauch der Formkörper zu Verfärbungen und Verminderungen der mechanischen Eigenschaften führt. Nachteilig ist ferner, daß die Mischung noch Formaldehydaddukte enthalten können, welche bei der Verarbeitung bei erhöhten Temperaturen durch Formaldehydabspaltung zu Geruchsbelästigungen führen können.

Aus den DE-A 36 28 560, DE-A 36 28 561 und DE-A 36 28 562 sind Polyoxymethylen-Formmassen bekannt, die als Stabilisatoren eine Mischung aus sterisch gehinderten Phenolen und Erdalkalisilikaten und Erdalkaliglycerophosphaten enthalten. Ausweislich der Beschreibung können als weitere Costabilisatoren auch Polyamide eingesetzt werden. Diese Massen weisen zwar eine bessere Thermostabilität auf, doch bestehen hinsichtlich der Farbqualität noch Verbesserungswünsche.

Thermoplaste mit einer hohen Kristallinität weisen eine gute Beständigkeit gegen zahlreiche Chemikalien auf, wobei die hohe Beständigkeit gegen Kraftstoffe (einschließlich den methanolhaltigen), Fette, Öle, Brems- und Kühlflüssigkeiten besonders hervorgehoben wird. Polyacetal beispielsweise zeigt nur eine geringe Quellung und demzufolge eine hohe Dimensionsstabilität. Die guten Verarbeitungsschwindung von Polyacetal (im Vergleich zu anderen technischen Thermoplasten) wird bei der Herstellung von Staugehäusen (Kraftstoffentnahmeeinrichtung) genutzt, da die in diese Anwendung integrierten Steckerverbindungen eine hohe Dichtigkeit aufweisen müssen. Gleichzeitig ist eine hohe Bruchdehnung des für das Staugehäuse verwendeten Materials notwendig, um die vom Gesetz geforderten Crashanforderungen zu erfüllen. Auch hierfür ist Polyacetal der Werkstoff der Wahl sowie für die gewünschte hohe Wärmeformbeständigkeit im Bereich der Kraftstoffhin- und rückführungssysteme.

Aufgrund der Tendenz im Automobilsektor immer leistungsfähigere und gleichzeitig sparsamere Motoren zu entwickeln, sind speziell im Bereich der Dieselfahrzeuge unerwartete Schwierigkeiten aufgetreten. Um eine optimale Verbrennung des Dieselkraftstoffe zu erreichen, wird der Dieselkraftstoff bei Drücken um 1300 bar zerstäubt. Anschließend erfolgt eine abrupte Entspannung auf 1 bar. Bei diesem Vorgang im sogenannten common rail system können kurzzeitig Temperaturen bis 160°C im Motorraum auftreten. Dies hat zur Folge, daß sich alle mit dem Dieselkraftstoff in Berührung kommenden Teile entsprechend stark aufheizen und durch Mischung von kaltem Kraftstoff aus dem Tank und heißem Kraftstoff aus dem Motorbereich im Kraftstoffhin- und -rückführungssystem Temperaturen um 90°C auftreten. Selbst im Tankbereich können noch Temperaturen über 90°C auftreten, da vom Kraftstoffgebersystem überschüssiger, noch heißer Dieselkraftstoffe in den Tank zurückgeführt wird. Unter diesen Bedingungen zersetzt sich

Polyacetal und schlägt sich in den Leitungen nieder, so daß diese zum einen brüchig und zum anderen undurchlässig für den Dieselkraftstoff werden.

Darüber hinaus enthalten Dieselkraftstoffe Schwefel bzw. Schwefelverbindungen, welche die POM-Matrix zusätzlich schädigen, da insbesondere unter Luftzufuhr saure Schwefelverbindungen entstehen, welche das Polymer abbauen.

Derartige Schwefelverbindungen finden sich ebenso in KFZ-Teilen, welche vulkanisierte Elastomere enthalten oder von solchen umhüllt werden (z.B. Lagerelemente im Betriebs- und Lenkungsbereich, welche aus Staubschutzgründen Elastomermanschetten aufweisen.

In der EP-A 855 424 werden als Additive sterisch gehinderte Amine vorgeschlagen. Nachteilig sind hierbei die schlechteren Farbeigenschaften des Polyoxymethylens sowie der Einsatz größerer Mengen eines teuren Additivs.

Polyethylenimine als solche sind ebenfalls bekannt und werden bei der Papierherstellung verwendet: sie aggregieren die Papierfasern und binden störende Begleitstoffe, werden also als Aggregationsmittel und als Flockungs- bzw. Komplexierungsmittel verwendet, und verbessern die Naßfestigkeit des Papiers. Außerdem werden Polyethylenimine bei der Herstellung von Farben und Lacken und zur Wasserbehandlung verwendet, außerdem als Klebstoffschichten in laminierten Polypropylenmehrschichtfolien, sowie bei der Erdöl- und Erdgasförderung, schließlich zur Immobilisierung von Enzymen. Siehe Ullmann's Encyclopedia of Industrial Chemistry, 6. Aufl., 1999 Electronic Release, Verlag VCH Weinheim, Stichwort "Aziridines", Kap. 6 "Uses" (nachfolgend als "Ullmann Electronic Release" zitiert). Die Verwendung von Polyethyleniminen als Bestandteil von thermoplastischen Formmassen ist bisher nicht bekannt.

Aufgabe der vorliegenden Erfindung war es daher, thermoplastische Formmassen zur Verfügung zu stellen, welche bei gleichzeitig guten Farbeigenschaften eine höhere Dieselkraftstoffbeständigkeit aufweisen.

Demgemäß wurden die eingangs definierten Formmassen gefunden. Bevorzugte Ausführungsformen sind den Unteransprüchen zu entnehmen.

Weiterhin wurde die Verwendung derartiger Formmassen zur Herstellung von Formkörpern jeglicher Art sowie die hierbei erhältlichen Formkörper gefunden sowie ein Verfahren zur Erhöhung der Dieselkraftstoffbeständigkeit von Polyoxymethylenen, derartig erhältliche POM-Formkörper und die Verwendung von Polyethyleniminen zur Erhöhung der Dieselkraftstoffbeständigkeit von Polyoxymethylenen.

Als Komponente A) enthalten die erfindungsgemäßen Formmassen 29 Gew.-% bis (100 Gew.-% minus 1 ppb), mindestens eines thermoplastischen Polyoxymethylenhomo- oder -copolymerisates. Bevorzugt beträgt der Anteil von A) 40 Gew.-% bis (100 Gew.-% minus 1 ppm), und insbesondere (50 Gew.-% minus 500 ppm) bis (100 Gew.-% minus 1 ppm). Diese Angaben sind auf die Formmassen A) bis C) bezogen. Es bedeuten ppb parts per billion (by weight) = $1{:}10^9$ und ppm parts per million (by weight) = $1{:}10^6$.

Die Schreibweise "(100 Gew.-% minus 1 ppb)" steht für den Anteil in Gewichtsprozent, dem man erhält, wenn man 1 ppb von 100 Gew.-% subtrahiert. Die gewählte Schreibweise erschien übersichtlicher als die Angabe im Format "99,999..." mit sehr vielen Neunen nach dem Dezimalkomma. Entsprechendes gilt für die Schreibweisen "(100 Gew.-% minus 1 ppm) "und" (100 Gew.-% minus 500 ppm)".

Derartige Polymerisate sind dem Fachmann an sich bekannt und in der Literatur beschrieben.

Ganz allgemein weisen diese Polymere mindestens 50 mol-% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten $-CH_2O-$ noch bis zu 50, vorzugsweise 0,1 bis 20, insbesondere 0,3 bis 10 mol-% und ganz besonders bevorzugt 2 bis 6 mol-% an wiederkehrenden Einheiten

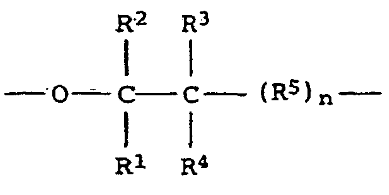

wobei $R^1$ bis $R^4$ unabhängig voneinander ein Wasserstoffatom, eine $C_1$-bis $C_4$-Alkylgruppe oder eine halogensubstituierte Alkylgruppe mit 1 bis 4 C-Atomen und $R^5$ eine $-CH_2-$, $-CH_2O-$, eine $C_1$-bis $C_4$-Alkyl- oder $C_1$-bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

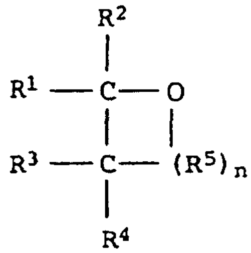

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel

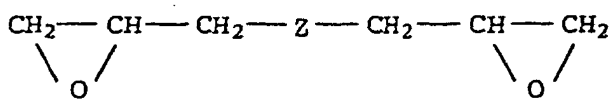

und/oder

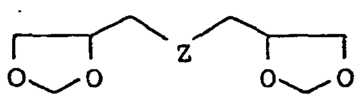

wobei Z eine chemische Bindung, -O-, -ORO- (R= $C_1$-bis $C_8$-Alkylen oder $C_2$-bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homound Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) $M_w$ im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente A) können insbesondere auch Produkte eingesetzt werden, die noch einen relativ hohen Anteil (im allg. > 0,1 Gew.-%) an thermisch instabilen Anteilen enthalten. Die Komponenten C) und D) insbesondere, wenn sie vor der Mischung mit dem Polyoxymethylen vorgemischt werden, stabilisieren derartige Roh-Polyoxymethylene sehr gut.

Die thermoplastischen Formmassen enthalten als Komponente B) erfindungsgemäß 1 ppb bis 1 Gew.-% mindestes eines Polyethylenimin-Homopolymerisats oder -Copolymerisates. Bevorzugt beträgt der Anteil von B) 1 ppm bis 0,1 Gew.-% und insbesondere 1 ppm bis 500 ppm. Diese Angaben beziehen sich auf die Formmasse aus A) bis C). Die Bezeichnungen ppb und ppm wurden bereits bei Komponente A) definiert.

Unter Polyethyleniminen im Sinne der vorliegenden Erfindung sollen sowohl Homo- als auch Copolymerisate verstanden werden, welche beispielsweise nach den Verfahren in Ullmann Electronic Release unter dem Stichwort "Aziridine" oder gemäß WO-A 94/12560 erhältlich sind.

Die Homopolymerisate sind im allgemeinen durch Polymerisation von Ethylenimin (Aziridin) in wäßriger oder organischer Lösung in Gegenwart von säureabspaltenden Verbindungen, Säuren oder LewisSäuren erhältlich. Derartige Homopolymerisate sind verzweigte Polymere, die in der Regel primäre, sekundäre und tertiäre Amino-gruppen im Verhältnis von ca. 30 % zu 40 % zu 30 % enthalten. Die Verteilung der Aminogruppen kann im allgemeinen mittels $^{13}C$-NMR Spektroskopie bestimmt werden.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylentest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) von 100 bis 3.000.000, vorzugsweise von 800 bis 2.000.000 auf (bestimmt mittels Lichtstreuung). Die Viskosität gemäß ISO 2555 (bei 20°C) liegt im allgemeinen im Bereich von 100 bis 200.000 mPas, vorzugsweise von 1000 bis 100.000 mPas.

Darüber hinaus eignen sich vernetzte Polyethylenimine, die durch Reaktion von Polyethyleniminen mit bi- oder polyfunktionellen vernetzern erhältlich sind, welche als funktionelle Gruppe mindestens eine Halogenhydrin-, Glycidyl-, Aziridin-, Isocyanateinheit oder ein Halogenatom aufweisen. Als Beispiele seinen Epichlorhydrin oder Bischlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen sind u.a. aus den o.g. Schriften sowie EP-A 895 521 und EP-A 25 515 bekannt.

Weiterhin sind gepfropfte Polyethylenimine geeignet, wobei als Pfropfmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine im Sinne der Erfindung sind amidierte Polymerisate, die üblicherweise durch Umsetzung von Polyethyleniminen mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine, die beispielsweise durch Umsetzung von Polyethylenimin mit Ethylenoxid und/oder Propylenoxid erhältlich sind. Auch derartige alkoxylierte Polymerisate sind anschließend vernetzbar.

Als weitere geeignete erfindungsgemäße Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so daß sich weitere Einzelheiten hierzu erübrigen.

Als Komponente C) können die erfindungsgemäßen Formmassen 0 bis 70, vorzugsweise 0 bis 30 Gew.-% weiterer Zusatzstoffe enthalten.

Als sterisch gehinderte Phenole C) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel

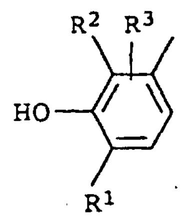

in Betracht, in der bedeuten:

> $R^1$ und $R^2$ eine Alkylgruppe, eine substituierte Alkylgruppe oder eine substituierte Triazolgruppe, wobei die Reste $R^1$ und $R^2$ gleich oder verschieden sein können und $R^3$ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel

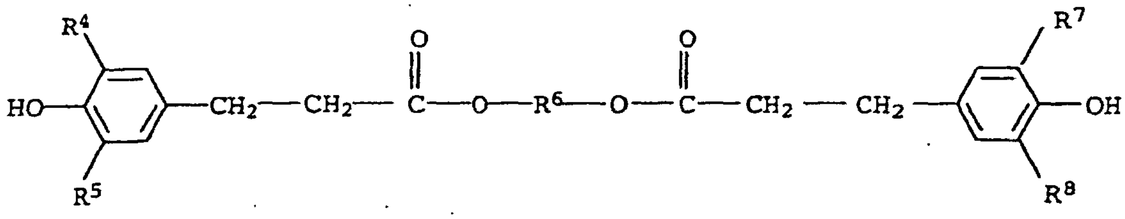

wobei $R^4$, $R^5$, $R^7$ und $R^8$ unabhängig voneinander $C_1$-$C_8$-Alkylgruppen darstellen, die ihrerseits substituiert sein können (mindestens eine davon ist eine sterisch anspruchsvolle Gruppe) und $R^6$ einen zweiwertigen aliphatischen Rest mit 1 bis 10 C Atomen bedeutet, der in der Hauptkette auch C-O-Bindungen aufweisen kann.

Bevorzugte Verbindungen, die dieser Formen entsprechen, sind

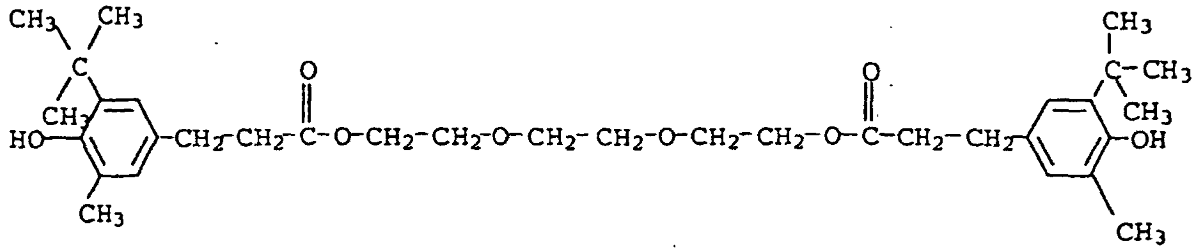

(Irganox® 245 der Firma Ciba-Geigy)

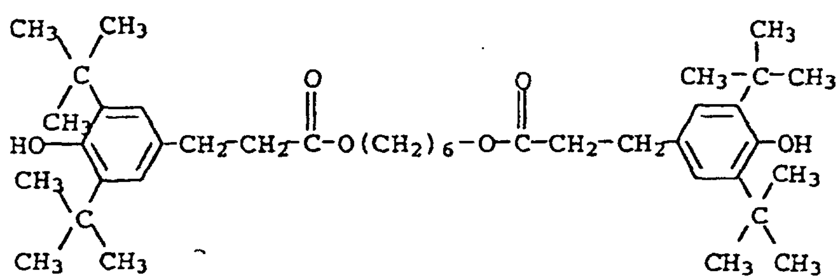

(Irganox® 259 der Firma Ciba-Geigy)

Beispielhaft genannt seien insgesamt als sterisch gehinderte Phenole: 2,2'-Methylen-bis-(4-methyl-6-tert.-butylphenol), 1,6-Hexandiolbis[3-(3,5-di-tert.-butyl-4-hydroxyphenyl)-propionat], Pentaerythril-tetrakis-[3-(3,5-di-tert.-butyl-4-hydroxyphenyl)-propionat], Distraryl-3,5-di-tert.-butyl-4-hydroxybenzylphosphonat, 2,6,7-Trioxa-1-phosphabicyclo-[2.2.2]oct-4-yl-methyl-3,5-ditert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-ditert.-butyl-4-hydroxybenzyl)-benzol, 4,4'-Methylen-bis-(2,6-ditert.-butylphenol), 3,5-Di-tert.-butyl-4-hydroxybenzyl-dimethylamin und N,N'-Hexamethylen-bis-3,5-di-tert.-butyl-4-hydroxyhydrocinnamid.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl)-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien (C), die einzeln oder als Gemische eingesetzt werden können, sind üblicherweise in einer

Menge bis zu 2 Gew.-%, vorzugsweise von 0,005 bis 2 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die als Komponenten C) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc., 1988, beschreiben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt bis zu 2 Gew.-%, vorzugsweise 0,005 bis 1,99 Gew.-%, bevorzugt 0,01 bis 0,08 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als weitere Stabilisatoren können die erfindungsgemäßen Polyoximethylen-Formmassen bis zu 2,0 Gew.-%, vorzugsweise 0,005 bis 0,5 Gew.-% und. insbesondere 0,01 bis 0,3 Gew.-%, bezogen auf das Gesamtgewicht der Formmassen eines oder mehrerer Erdalkalisilikate und/oder Erdalkaliglycerophosphate enthalten. Als Erdalkalimetalle zur Bildung der Silikate und Glycerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und/oder Calciumsilikat und vorzugsweise Magnesiumsilikat, wobei als Erdalkalisilikate, insbesondere solche bevorzugt sind, die durch die Formel

$$Me \cdot x\ SiO_2 \cdot n\ H_2O$$

beschrieben werden, in der bedeuten

Me ein Erdalkalimetall, vorzugsweise Calcium oder insbesondere Magnesium,

x eine Zahl von 1,4 bis 10, vorzugsweise 1,4 bis 6 und

n eine Zahl gleich oder größer als 0, vorzugsweise 0 bis 8.

Die Verbindungen werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Vorzugsweise Anwendung finden Calcium- und Magnesiumsilikate und/oder Calcium- und Magnesiumglycerophosphate. Diese können beispielsweise durch die folgenden Kenndaten näher spezifiziert werden:

Calcium- bzw.- Magnesiumsilikat:

Gehalt an CaO bzw. MgO: 4 bis 32 Gew.-%, vorzugsweise 8 bis 30 Gew.-% und insbesondere 12 bis 25 Gew.-%, Verhältnis $SiO_2$ : CaO bzw. $SiO_2$ : MgO (mol/mol) : 1,4 bis 10, vorzugsweise 1,4 bis 6 und insbesondere 1,5 bis 4, Schüttgewicht: 10 bis 80 g/100 ml, vorzugsweise 10 bis 40 g/100 ml und durchschnittliche Kenngröße: kleiner als

100 μm, vorzugsweise kleiner als 50 μm und

Calcium- bzw. Magnesiumglycerophosphate:

Gehalt an CaO bzw. MgO: größer als 70 Gew.-%, vorzugsweise größer als 80 Gew.-%
Glührückstand: 45 bis 65 Gew.-%
Schmelzpunkt: größer als 300°C und
durchschnittliche Korngröße: kleiner als 100 μm, vorzugsweise kleiner als 50 μm.

Als bevorzugte Schmiermittel C) können die erfindungsgemäßen Formmassen bis zu 5, vorzugsweise 0,09 bis 2 und insbesondere 0,1 bis 0,7 mindestens eines Esters oder Amids gesättigter oder ungesättigter aliphatischer Carbonsäuren mit 10 bis 40 C-Atomen bevorzugt 16 bis 22 C-Atomen mit Polyolen oder aliphatischen gesättigten Alkoholen oder Aminen mit 2 bis 40 C-Atomen bevorzugt 2 bis 6 C-Atomen oder einem Ether, der sich von Alkoholen und Ethylenoxid ableitet, enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung aus Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weiterhin geeignet sind Polyetherpolyole oder Polyesterpolyole, welche mit ein- oder mehrwertigen Carbonsäuren, vorzugsweise Fettsäuren verestert bzw. verethert sind. Geeignete Produkte sind im Handel beispielsweise als Loxiol® EP 728 der Firma Henkel KGaA erhältlich.

Bevorzugte Ether, welche sich von Alkoholen und Ethylenoxid ableiten, weisen die allgemeine Formel

$$RO\ (CH_2\ CH_2\ O)_n\ H$$

auf, in der R eine Alkylgruppe mit 6 bis 40 Kohlenstoffatomen und n eine ganze Zahl größer/gleich 1 bedeutet. Insbesondere bevorzugt für R ist ein gesättigter $C_{16}$ bis $C_{18}$ Fettalkohol mit $n \approx 50$, welcher als Lutensol® AT 50 der Firma BASF im Handel erhältlich ist.

Die erfindungsgemäßen Formmassen können 0 bis 5, bevorzugt 0,001 bis 5 Gew.-%, vorzugsweise 0,01 bis 3 Gew.-% und insbesondere 0,05 bis 1 Gew.-% eines Melamin-Formaldehyd-Kondensates enthalten. Vorzugsweise ist dieses ein Fällungskondensat in feinteiliger Form, welches vernetzt und wasserunlöslich ist. Das Molverhältnis Formaldehyd zu Melamin beträgt vorzugsweise 1,2:1 bis 10:1, insbesondere 1,2:1 bis 2:1. Aufbau und Verfahren zur Herstellung derartiger Kondensate sind der DE-A 25 40 207 zu entnehmen.

Als Komponente C) können die erfindungsgemäßen Formmassen 0,0001 bis 1 Gew.-%, vorzugsweise 0,001 bis 0,8 Gew.-% und insbesondere 0,01 bis 0,3 Gew.-% eines Nukleierungsmittels enthalten.

Als Nukleierungsmittel kommen alle bekannten Verbindungen in Frage, beispielsweise Melamincyanurat, Borverbindungen wie Bornitrid, Kieselsäure, Pigmente wie z.B. Heliogenblau® (Kupferphtalocyaninpigment; eingetragenes Warenzeichen der BASF Aktiengesellschaft) oder verzweigte Polyoxymethylene, welche in diesen geringen Mengen eine nukleierende Wirkung zeigen.

Insbesondere wird als Nukleierungsmittel Talkum verwendet, welches ein hydratisiertes Magnesiumsilikat der Zusammensetzung $Mg_3[(OH)_2/Si_4O_{10}]$ oder $MgO \cdot 4\ SiO_2 \cdot H_2O$ ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na, und K anwesend sein, wobei die OH-Gruppe teilweise durch Fluorid ersetzt sein kann.

Besonders bevorzugt wird Talkum eingesetzt, dessen Teilchengrößen zu 100 % < 20 μm beträgt. Die Teilchengrößenverteilung wird üblicherweise durch Sedimentationsanalyse bestimmt und beträgt vorzugsweise:

| | |
|---|---|
| < 20 μm | 100 Gew.-% |

(fortgesetzt)

| | |
|---|---|
| < 10 µm | 99 Gew.-% |
| < 5 µm | 85 Gew.-% |
| < 3 µm | 60 Gew.-% |
| < 2 µm | 43 Gew.-% |

Derartige Produkte sind im Handel als Micro-Talc I.T. extra (Fa. Norwegian Talc Minerals) erhältlich.

Als Füllstoffe in Mengen bis zu 50 Gew.-%, vorzugsweise 5 bis 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Calciumcarbonat oder Glaskugeln, vorzugsweise in gemahlener Form oder Mischungen dieser Füllstoffe.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut

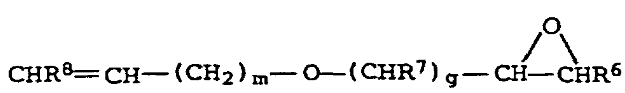

(I)

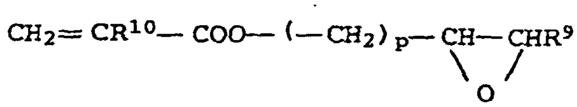

(II)

wobei $R^6$ - $R^{10}$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^6$ bis $R^8$ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus

| | |
|---|---|
| 50 bis 98,<br>0 bis 40,<br>1 bis 50, | insbesondere 55 bis 95 Gew.-% Ethylen, insbesondere 0,3 bis 20 Gew.-% Glycidylacrylat und/oder<br>insbesondere 0,1 bis 20 Gew.-% Glycidylmethacrylat, und<br>insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird u.a. durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Aminooder Amidgruppen sowie funktionelle Gruppen, die durch Mitverwendung von Monomeren der allgemeinen Formel

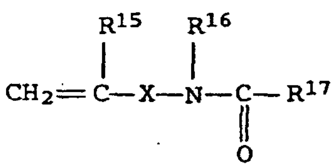

eingeführt werden können,
wobei die Substituenten folgende Bedeutung haben können:

$R^{15}$ Wasserstoff oder eine $C_1$- bis $C_4$-Alkylgruppe,

$R^{16}$ Wasserstoff, eine $C_1$- bis $C_8$-Alkylgruppe oder eine Arylgruppe, insbesondere Phenyl,

$R^{17}$ Wasserstoff, eine $C_1$- bis $C_{10}$-Alkyl-, eine $C_6$- bis $C_{12}$-Arylgruppe oder $-OR_{18}$

$R^{18}$ eine $C_1$- bis $C_8$-Alkyl- oder $C_6$- bis $C_{12}$-Arylgruppe, die gegebenenfalls mit O- oder N-haltigen Gruppen substituiert sein können,

X eine chemische Bindung, eine $C_1$- bis $C_{10}$-Alkylen- oder $C_6$-$C_{12}$-Arylengruppe oder

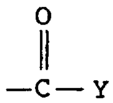

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat, Butandioldiacrylat und Dihydrodicyclo- pentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomeren; für nähere Einzelheiten sei hier beispielsweise auf die US-PS 4 148 846 verwiesen.

Im allgemeinen beträgt der Anteil dieser vernetzenden Monomeren an der Komponente C) bis zu 5 Gew.-%, vorzugsweise nicht mehr als 3 Gew.-%, bezogen auf C).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere C) können auch nach anderen üblichen Verfahren, z.B. durch Suspensionspolymerisation, hergestellt werden.

Als weitere geeignete Elastomere seien thermoplastische Polyurethane genannt, wie sie beispielsweise in der EP-A 115 846 und EP-A 115 847 sowie EP-A 117 664 beschrieben sind.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Haftvermittler und Pigmente genannt. Der Anteil solcher Zusätze liegt im allgemeinen im Bereich von 0,001 bis 5 Gew.-%.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die Komponente B) sowie gegebenenfalls die Komponente(n) C) können in einer bevorzugten Herstellungsform vorzugsweise bei Raumtemperaturen auf das Granulat von A) aufgebracht und anschließend extrudiert werden.

Aus den Formmassen lassen sich Formkörper (auch Halbzeuge, Folien, Filme und Schäume) aller Art herstellen. Die Formmassen zeichnen sich durch gleichzeitig gute Farbeigenschaften (obwohl eine stickstoffhaltige Verbindung zugegeben wird) sowie verbesserte Dieselkraftstoffbeständigkeit aus. Daher eignen sich derartige Formkörper insbesondere zur Anwendung als Kettenglieder, Gleitrollen, Gleitschienen, Zahnräder, dieselkraftstoffbeständige Formteile im KFZ-Motor sowie Motorraum- und Lagerelemente für den KFZ-Antriebs- und Lenkungsbereich wie Kraftstoffentnahmevorrichtung, Roll-over Ventile, Dieselkraftstoffleistungen, Unterdruckventile, Halterungen für Dieselkraftstoffpumpen, Pumpengehäuse, Innenteile für Dieselkraftstoffpumpen, insbesondere Läufer und Starter im Elektromotor.

Beispiele

Es wurden folgende Komponenten eingesetzt:

Komponente A)

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen MVR von 2,2 ml/10 min (190°C, 2,16 kg, nach ISO 1133/B).

Komponente B)

| | Wirkstoffgehalt (wäßrige Lösung) % | Viskosität (20°C) MPa*s ISO 2555 | Molekulargewicht ($M_w$) gem. Lichtstreuung |
|---|---|---|---|
| B1 | > 98 | ca. 300 | 800 |
| B2 | ca. 50 | ca. 1200 | 5000 |
| B3 | ca. 50 | ca. 14000 | 35000 |
| B4 | ca. 50 | ca. 24000 | 750000 |
| B5 | ca. 33 | ca. 1400 | 750000 |
| B6 | ca. 24 | ca. 750 | 2000000 |
| B7 | ca. 50 | ?? | ?? |

Komponenten C)

C/1 Irganox® 245 der Firma Ciba Geigy:

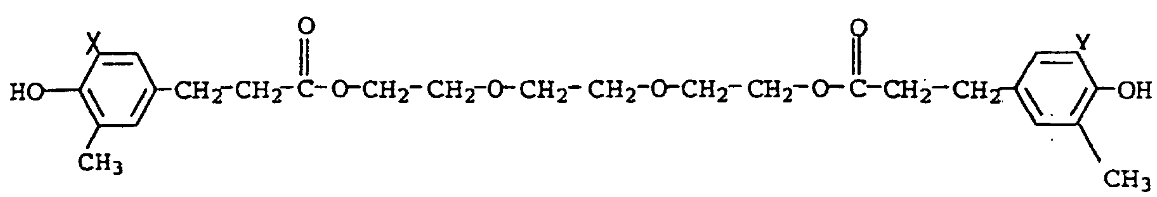

C/2 Polyamid-Oligomeres mit einem Molekulargewicht von etwa 3000, hergestellt aus Caprolactam, Hexamethylendiamin, Adipinsäure und Propionsäure (als Molekulargewichtsregler) in Anlehnung an die Beispiele 5-4 der US-A 3 960 984 ("PA-dicapped").

C/3 Synthetisches Mg-Silicat (Ambosol® Firma Societe Nobel, Puteaux) mit folgenden Eigenschaften:

| | |
|---|---|
| Gehalt an MgO | ≥ 14,8 Gew.-% |

(fortgesetzt)

| | |
|---|---|
| Gehalt an $SiO_2$ | ≥ 59 Gew.-% |
| Verhältnis $SiO_2$:MgO | 2,7 mol/mol |
| Schüttdichte | 20 bis 30 g/100 m |
| Glühverlust | < 25 Gew.-% |

C/4 Ein Melamin-Formaldehyd-Kondensat gemäß Beispiel 1 der DE-A 25 40 207.

Zur Herstellung der Formmassen wurde die Komponente A mit den in der Tabelle angegebenen Mengen an C und B in einem Trockenmischer bei einer Temperatur von 23°C gemischt.

Die Komponenten wurden in einem Doppelschneckenextruder mit Entgasungsvorrichtung (ZSK 30 der Firma Werner & Pfleiderer) bei 220°C homogenisiert und das homogenisierte Gemisch durch eine Düse als Strang ausgepreßt und granuliert. Die Prüfkörper wurden bei 190°C hergestellt.

Zur Prüfung der Thermostabilität wurden bestimmt:

| | |
|---|---|
| GV $N_2$ | Der Gewichtsverlust in Prozent einer Probe aus 1,2 g Granulat bei 2-stündigem Erhitzen auf 220°C unter Stickstoff, |
| GV Luft | Gewichtsverlust in Prozent einer Probe aus 1,2 g Granulat bei 2-stündigem Erhitzen auf 220°C unter Luft. |

Farbmessungen gemäß DIN 5033:

ΔE ≙ Gesamtfarbabstand gemäß DIN 6174 ΔL ≙ Abweichung in Hell-Dunkel-Richtung Δa ≙ Rot-Grün-Abweichung Δb ≙ Blau-Gelb-Abweichung

Das Vorzeichen +/- definiert die Abweichung gegenüber dem Standard bzw. Bezugspunkt; in diesem Fall diente als Bezugspunkt ein Weißstandard.

| | |
|---|---|
| ΔL | + heller |
| | - dunkler |
| Δa | + roter |
| | - grüner |
| Δb | + gelber |
| | - blauer |

Der Gesamtfarbabstand ΔE berechnet sich wie folgt:

$$\Delta E = \sqrt{\Delta L^2 + \Delta a^2 + \Delta b^2}$$

Bedingungen für Beleuchtung und Sicht:

1. Probengröße: unbegrenzt
Optischer Meßkopf mit Öffnung nach unten: maximal 165,1 mm vom Rand zur Mittellinie des Strahls

2. Durchmesser der beleuchteten Fläche:
Standard: 44 mm

3. Durchmesser der Öffnung:
Standard: 50 mm

4. Einfallstrahl Durchschnittswinkel -0° zur Normalprobe Gegenüberliegender (Feld)Winkel -22° für eine beleuchtete Fläche von 44 mm Durchmesser

5. Reflektierter (Sicht)Strahl - rundum Durchschnittswinkel -45° zur Normalprobe Gegenüberliegender (Feld)Winkel -24° für eine beleuchtete Fläche von 44 mm Durchmesser

Glanzreflektion ausgeschlossen

Dieselkraftstoffbeständigkeit

Die Lagerung erfolgte in Winterdieselkraftstoff CFPP bis -22°C der Fa. Haltermann, Lagerungsdauer 300 h, Lagerungstemperatur in der Regel 90°C (Abweichungen sind angemerkt). In ein mit 21 Dieselkraftstoff gefülltes Glasgefäß, bestückt mit Rückflußkühler, wurden 5 POM-Rundschreiben mit 2 mm Dicke, 60 mm Durchmesser und Anguß (Gesamtoberfläche von 405 $cm^2$) gegeben. Am oberen Ende des Angusses wurden die Rundscheiben so zusammengefügt, daß sie sich gegenseitig nicht berühren konnten und gewährleistet war, daß diese vollständig von Kraftstoff umspült wurden. Nach 300 Std. Lagerung wurden die Rundscheiben entnommen, auf ein gut saugendes, nicht fusselndes Tuch gelegt und bei RT 4 Std. liegen gelassen, bis überschüssige Flüssigkeit entfernt war. Danach wurde das Gewicht der zusammengefügten 5er-Einheit Rundscheiben gewogen und der Gewichtsverlust bestimmt. Nach dem ersten Wiegevorgang nach Lufttrocknung wurden die Rundscheiben im Umluftschrank 24 h bei 90°C getrocknet und nochmals gewogen.

Die Ergebnisse der Messungen und die Zusammensetzungen der Formmassen sind den Tabellen 1-4 zu entnehmen.

Tabelle 1:

Zusammensetzung

| Beispiel | | Vergleich 1 | 1 | 2 | 3 | 4 | 5 | 6 | 7 | 8 |
|---|---|---|---|---|---|---|---|---|---|---|
| A | Gew.-[%] | 99,36 | 99,3995 | 99,399 | 99,3995 | 99,399 | 99,3995 | 99,399 | 99,3995 | 99,399 |
| C/1 | Gew.-[%] | 0,35 | 0,35 | 0,35 | 0,35 | 0,35 | 0,35 | 0,35 | 0,35 | 0,35 |
| C/2 | Gew.-[%] | 0,04 | | | | | | | | |
| C/3 | Gew.-[%] | 0,05 | 0,05 | 0,05 | 0,05 | 0,05 | 0,05 | 0,05 | 0,05 | 0,05 |
| C/4 | Gew.-[%] | 0,2 | 0,2 | 0,2 | 0,2 | 0,2 | 0,2 | 0,2 | 0,2 | 0,2 |
| B7 | Gew.-[%] | | 0,0005 | 0,001 | | | | | | |
| B3 | Gew.-[%] | | | | 0,0005 | 0,001 | | | | |
| B6 | Gew.-[%] | | | | | | 0,0005 | 0,0010 | | |
| B5 | Gew.-[%] | | | | | | | | 0,0005 | 0,0010 |
| $N_2$ | [%] | 0,26 | 0,10 | 0,09 | 0,12 | 0,07 | 0,09 | 0,09 | 0,01 | 0,04 |
| Luft | [%] | 2,09 | 1,38 | 1,24 | 1,50 | 1,00 | 1,57 | 1,24 | 1,04 | 1,16 |
| Delta E | | 10,38 | 9,24 | 9,47 | 9,33 | 9,34 | 7,49 | 7,88 | 8,30 | 9,39 |

Tabelle 2:

Zusammensetzung

| Beispiel | | 9 | 10 | 11 | 12 | 13 | 14 |
|---|---|---|---|---|---|---|---|
| A | Gew.-[%] | 99,3995 | 99,399 | 99,3995 | 99,399 | 99,3995 | 99,399 |
| C/1 | Gew.-[%] | 0,35 | 0,35 | 0,35 | 0,35 | 0,35 | 0,35 |
| C/2 | Gew.-[%] | | | | | | |
| C/3 | Gew.-[%] | 0,05 | 0,05 | 0,05 | 0,05 | 0,05 | 0,05 |
| C/4 | Gew.-[%] | 0,2 | 0,2 | 0,2 | 0,2 | 0,2 | 0,2 |
| B4 | Gew.-[%] | 0,0005 | 0,001 | | | | |
| B1 | Gew.-[%] | | | 0,0005 | 0,001 | | |
| B2 | Gew.-[%] | | | | | 0,0005 | 0,001 |
| $N_2$ | [%] | 0,23 | 0,04 | 0,11 | 0,10 | 0,10 | 0,06 |
| Luft | [%] | 1,77 | 1,49 | 1,36 | 1,31 | 2,23 | 1,36 |
| Delta E | | 8,11 | 8,21 | 8,83 | 8,45 | 9,28 | 9,47 |

Tabelle 3:

Zusammensetzung

| Beispiel | | Vergleich 1 | Vergleich 2 | 1 | 2 | 3 | 4 | 5 | 6 | 7 | 8 |
|---|---|---|---|---|---|---|---|---|---|---|---|
| A | Gew.-[%] | 99,36 | 99,36 | 99,31 | 99,26 | 99,16 | 99,31 | 99,26 | 99,16 | 99,31 | 99,26 |
| C/1 | Gew.-[%] | 0,35 | 0,35 | 0,35 | 0,35 | 0,35 | 0,35 | 0,35 | 0,35 | 0,35 | 0,35 |
| C/2 | Gew.-[%] | 0,04 | 0,04 | 0,04 | 0,04 | 0,04 | 0,04 | 0,04 | 0,04 | 0,04 | 0,04 |
| C/3 | Gew.-[%] | 0,05 | 0,05 | 0,05 | 0,05 | 0,05 | 0,05 | 0,05 | 0,05 | 0,05 | 0,05 |
| C/4 | Gew.-[%] | 0,2 | 0,2 | 0,2 | 0,2 | 0,2 | 0,2 | 0,2 | 0,2 | 0,2 | 0,2 |
| B1 | Gew.-[%] | | | 0,05 | 0,1 | 0,2 | | | | | |
| B2 | Gew.-[%] | | | | | | 0,05 | 0,1 | 0,2 | | |
| B3 | Gew.-[%] | | | | | | | | | 0,05 | 0,1 |
| Abbau | [%] | -13,65 | -12,94 | -0,09 | 0,1 | 0,08 | 0,02 | 0,02 | -0,01 | -0,13 | -0,07 |

Tabelle 4:

Zusammensetzung

| Beispiel | | 9 | 10 | 11 | 12 | 13 | 14 | 15 | 16 | 17 |
|---|---|---|---|---|---|---|---|---|---|---|
| A | Gew.-[%] | 99,31 | 99,26 | 99,160 | 99,31 | 99,26 | 99,16 | 99,31 | 99,26 | 99,16 |
| C/1 | Gew.-[%] | 0,35 | 0,35 | 0,35 | 0,35 | 0,35 | 0,35 | 0,35 | 0,35 | 0,35 |
| C/2 | Gew.-[%] | 0,04 | 0,04 | 0,04 | 0,04 | 0,04 | 0,04 | 0,04 | 0,04 | 0,04 |
| C/3 | Gew.-[%] | 0,05 | 0,05 | 0,05 | 0,05 | 0,05 | 0,05 | 0,05 | 0,05 | 0,05 |
| C/4 | Gew.-[%] | 0,2 | 0,2 | 0,2 | 0,2 | 0,2 | 0,2 | 0,2 | 0,2 | 0,2 |
| B4 | Gew.-[%] | 0,05 | 0,1 | 0,2 | | | | | | |
| B5 | Gew.-[%] | | | | 0,05 | 0,1 | 0,2 | | | |
| B6 | Gew.-[%] | | | | | | | 0,05 | 0,1 | 0,2 |
| Abbau | | -0,15 | 0,31 | 0,31 | -1,19 | -0,1 | 0,37 | -2,97 | -0,48 | 0,1 |

## Patentansprüche

1. Thermoplastische Formmassen, enthaltend als wesentliche Komponenten

   A) 29 bis (100 Gew.-% minus 1 ppb) mindestens eines thermoplastischen Polyoxymethylenhomo- oder -copolymerisates,

   B) 1 ppb bis 1 Gew.-% mindestens eines Polyethyleniminhomooder -copolymerisates,
   sowie darüber hinaus

   C) 0 bis 70 Gew.-% weiterer Zusatzstoffe,

   wobei die Gewichtsprozente der Komponenten A) bis C) stets 100 % ergeben.

2. Thermoplastische Formmassen nach Anspruch 1, wobei die Polyethylenimin-Polymerisate ausgewählt sind aus

   - Homopolymeren des Ethylenimins,
   - Copolymeren aus Ethylenimin und Aminen mit mindestens zwei Aminogruppen,
   - vernetzten Polyethyleniminen,
   - gepfropften Polyethyleniminen,
   - amidierten Polymerisaten erhältlich durch Umsetzung von Polyethyleniminen mit Carbonsäuren oder Carbonsäureestern, -anhydriden, -amiden oder -halogeniden,
   - alkoxylierten Polyethyleniminen,
   - hydroxylgruppenhaltigen Polyethyleniminen,
   - amphoteren Polyethyleniminen, und
   - lipophilen Polyethyleniminen.

3. Thermoplastische Formmassen nach den Ansprüchen 1 oder 2, wobei der Anteil der Polyethylenimin-Polymerisate B) 1 ppm bis 0,1 Gew.-% beträgt.

4. Verwendung von thermoplastischen Formmassen gemäß den Ansprüchen 1 bis 3 zur Herstellung von Formkörpern, Folien, Fasern und Schäumen.

5. Formkörper, Folien, Fasern und Schäume erhältlich aus den thermoplastischen Formmassen gemäß den Ansprüchen 1 bis 3.

6. Verfahren zur Erhöhung der Dieselkraftstoffbeständigkeit, **dadurch gekennzeichnet, daß** man einem Polyoxymethylenhomo- oder copolymerisat A) 1 ppb bis 1 Gew.-% eines Polyethyleniminhomo- oder -copolymerisat zufügt.

7. Verwendung von Polyethyleniminhomo- oder -copolymerisaten zur Erhöhung der Dieselkraftstoffbeständigkeit von Polyoxymethylenhomo- oder -copolymerisaten.

## Claims

1. A thermoplastic molding composition comprising, as substantive components,

   A) from 29% by weight to (100% minus 1 ppb) of at least one thermoplastic polyoxymethylene homo- or copolymer,

B) from 1 ppb to 1% by weight of at least one polyethyleneimine homo- or copolymer, and also

C) from 0 to 70% by weight of other additives,

where the percentages by weight of components A) to C) always give 100%.

**2.** A thermoplastic molding composition as claimed in claim 1, where the polyethyleneimine polymers have been selected from

- homopolymers of ethyleneimine,
- copolymers of ethyleneimine and amines having at least two amino groups,
- crosslinked polyethyleneimines,
- grafted polyethyleneimines,
- amidated polymers obtainable by reacting polyethyleneimines with carboxylic acids or with carboxylic esters, with carboxylic anhydrides, with carboxamides, or with carbonyl halides,
- alkoxylated polyethyleneimines,
- polyethyleneimines containing hydroxyl groups,
- amphoteric polyethyleneimines, and
- lipophilic polyethyleneimines.

**3.** A thermoplastic molding composition as claimed in claim 1 or 2, where the proportion of the polyethyleneimine polymers (B) is from 1 ppm to 0.1% by weight.

**4.** The use of thermoplastic molding compositions as claimed in any of claims 1 to 3 for producing moldings, films, fibers or foams.

**5.** A molding, film, fiber or foam obtainable from the thermoplastic molding compositions as claimed in any of claims 1 to 3.

**6.** A process for increasing diesel-fuel resistance, which comprises adding from 1 ppb to 1% by weight of a polyethyleneimine homo- or copolymer to a polyoxymethylene homo- or copolymer A).

**7.** The use of polyethyleneimine homo- or copolymers for increasing the diesel-fuel resistance of polyoxymethylene homo- or copolymers.

## Revendications

**1.** Masses de moulage thermoplastiques, contenant comme composants essentiels

A) 29 à (100% en poids moins 1 ppb) d'au moins un homopolymère ou copolymère de polyoxyméthylène thermoplastique,
B) 1 ppb à 1% en poids d'au moins un homopolymère ou copolymère de polyéthylèneimine, ainsi qu'en outre
C) 0 à 70% en poids d'autres additifs,

les % en poids des composants A) à C) donnant toujours 100%.

**2.** Masses de moulage thermoplastiques suivant la revendication 1, dans lesquelles les polymères de polyéthylèneimine sont choisis parmi

- des homopolymères de l'éthylèneimine,
- des copolymères d'éthylèneimine et d'amines comportant au moins deux groupes amino,
- des polyéthylèneimines réticulées,
- des polyéthylèneimines greffées,
- des polymères amidés que l'on peut obtenir par réaction de polyéthylèneimines avec des acides carboxyliques ou des esters, anhydrides, amides ou halogénures d'acide carboxylique,
- des polyéthylèneimines alcoxylées,
- des polyéthylèneimines contenant des groupes hydroxyle,
- des polyéthylèneimines amphotères, et
- des polyéthylèneimines lipophiles.

**3.** Masses de moulage thermoplastiques suivant l'une des revendications 1 et 2, dans lesquelles la fraction des polymères de polyéthylèneimine B) est de 1 ppm à 0,1% en poids.

**4.** Utilisation de masses de moulage thermoplastiques suivant l'une des revendications 1 à 3, pour la préparation de corps façonnés, de feuilles, de fibres et de mousses.

**5.** Corps façonnés, feuilles, fibres et mousses que l'on peut obtenir à partir des masses de moulage thermoplastiques suivant l'une des revendications 1 à 3.

**6.** Procédé pour augmenter la résistance au carburant Diesel, **caractérisé en ce qu'**on ajoute à un homopolymère ou copolymère de polyoxyméthylène A) 1 ppb à 1% en poids d'un homopolymère ou copolymère de polyéthylèneimine.

**7.** Utilisation d'homopolymères ou copolymères de polyéthylèneimine pour augmenter la résistance au carburant Diesel d'homopolymères ou copolymères de polyoxyméthylène.